# EUROPEAN PATENT APPLICATION

(11) **EP 1 249 340 A1**
(43) Date of publication of application: **16.10.2002**
(21) Application number: 00900835.0
(22) Date of filing: 20.01.2000
(51) Int. Cl.: B32B 31/00

(54) **LAMINATOR**

(71) Applicant: SANEI GIKEN CO., LTD., Amagasaki-shi, Hyogo 660-0806 (JP)
(72) Inventor: MIYAKE, Eiichi, Sanei Giken Co., Ltd, Hyogo 660-0806 (JP)
(74) Representative: HOFFMANN - EITLE
(86) International application number: JP0000249
(87) International publication number: WO01053094

(57) **Abstract**

A laminator for laminating a film on a substrate 1 comprises frames 10 and 11, a pair of elongated rolls 2 and a pair of bars 6. Each bar 6 is provided behind pressure roll 2 and extends in parallel to the pressure roll 2. The end portions of the bar 6 are supported by bearing housings 5 for the pressure roll 2. Bar-supporting members 13 and 14 for connecting the bars 6 to the frames 10 and 11 are provided at the central portions of the bars 6. One bar-supporting member includes a pressure-applying apparatus 13. When the pressure-applying apparatus 13 is operated, pressure is applied to the substrate 1 and the film between the pressure rolls 2 through the bars 6 and the bearing housings 5. At the same time, bending moments which tend to cause the pressure rolls 2 to be projected toward each other are applied to the end portions of the pressure rolls 2.

## Description

### TECHNICAL FIELD

The present invention relates to a laminator for laminating a film on a substrate.

### TECHNICAL BACKGROUND

There has been known a laminator using a pair of pressure rolls for laminating a film on one or both of opposite surfaces of a substrate. When a substrate which has been transferred toward the laminator is supplied to an area between the pressure rolls, a film is also supplied to the area between the pressure rolls, to thereby adhere the film to the substrate under pressure.

Pressure required for adhering the film to the substrate is applied by a pressure-applying apparatus such as an air cylinder apparatus, which applies force to bearings provided at opposite end portions of the pressure rolls.

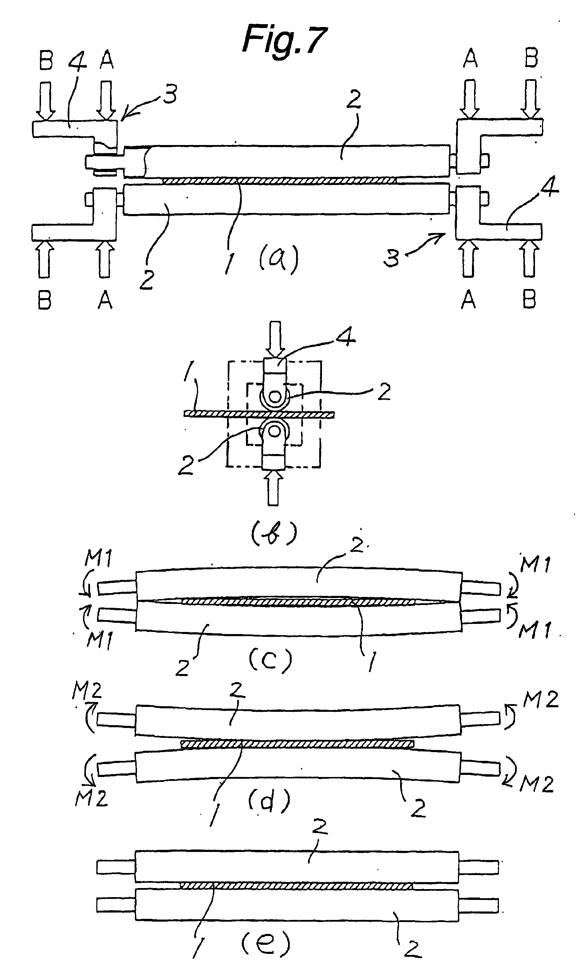

Fig. 7 shows a set of diagrams for explaining an effect of bending of pressure rolls, which occurs when force is applied to bearings on the pressure rolls by a pressure-applying apparatus. Referring to Figs. 7(a) and 7(b), force is directly applied, by pressure-applying apparatuses provided at positions A, to bearings 3 on opposite ends of a pair of pressure rolls having a substrate 1 sandwiched therebetween, or force is applied, by pressure-applying apparatuses provided at positions B, to the bearings 3 through levers 4 extending outward in an axial direction of the pressure rolls 2. In either case, the pressure rolls 2 having the substrate 1 sandwiched therebetween are bent due to bending moments M1 and recessed away from each other as shown in Fig. 7(c). Consequently, the pressure of the pressure rolls 2 becomes lower at a central portion of the substrate 1 and therefore, the film cannot be laminated on the substrate 1 under uniform pressure.

For laminating, for example, a photosensitive resist film on a substrate for a print circuit board, it is strongly desired to adhere the film to the substrate under uniform pressure.

Therefore, it has been proposed to generate a bending moment M2 having the same magnitude as the bending moment M1 and acting in a direction opposite to the direction of the bending moment M1 so that the pair of pressure rolls 2 tend to be projected toward each other as shown in Fig. 7(d), to thereby cancel the effect of bending moments M1 (reference is made to Unexamined Japanese Patent Application Public Disclosure No. 10-146891).

In this arrangement, the bending moments M1 and M2 are imparted to the pressure rolls at the same time, so that their actions of bending the pressure rolls in opposite directions are substantially canceled. Consequently, as shown in Fig. 7(e), the pressure rolls 2 can be held in a substantially straight condition to apply pressure to the substrate 1 and the film.

### DISCLOSURE OF THE INVENTION

Based on this idea disclosed in Unexamined Japanese Patent Application Public Disclosure No. 10-146891, the present invention provides a specific arrangement for applying uniform pressure to a substrate and a film by means of a pair of pressure rolls.

For providing a specific arrangement, it is preferred that the arrangement be made as simple as possible and the number of pressure-applying apparatuses be minimized.

Therefore, the present invention provides a laminator for laminating a film on a substrate, comprising:
a frame;
a pair of elongated pressure rolls adapted to have the substrate and the film sandwiched therebetween;
bearings adapted to rotatably support respective end portions of the pressure rolls, each of the bearings comprising a bearing housing;
a pair of bars each provided behind each of the pressure rolls and extending in parallel to the pressure rolls, respective end portions of the bars being supported by the bearing housings; and
bar-supporting means for attaching a central portion of each of the bars to the frame,
wherein:
the bar-supporting means associated with at least one of the bars includes pressure-applying means; and
when the pressure-applying means is operated, pressure is applied through the bars and the bearing housings to the substrate and the film between the pressure rolls, while bending moments which tend to cause the pressure rolls to be projected toward each other are transmitted to the end portions of the pressure rolls.

The end portions of the bars may be supported by the bearing housings in a manner such that they are inserted into openings formed in the bearing housings.

A cross-section of the opening of the bearing housing and a cross-section of the end portion of the bar inserted into the opening may be circular.

The laminator may be arranged, such that:
the end portion of the bar has an I-shaped cross-section including a web portion and two flange portions;
the bearing housing includes two lever portions extending inwardly therefrom in an axial direction of the pressure roll on opposite sides of the web portion of the bar; and
the end portions of the bars are supported by the bearing housings in a manner such that each of the lever portions is provided with a roller at a free end portion thereof and the roller is engaged with the flange portion on each of opposite sides of the web portion.

The laminator may be arranged, such that:
the pressure roll, the bearing housings and the bar on one side and the pressure roll, the bearing housings and the bar on the other side are provided in symmetrical disposition and have substantially the same construction;
only the bar-supporting means on one side includes the pressure-applying means which is capable of being operated so as to press the central portion of the bar; and
the bar-supporting means on the other side is arranged as a member which receives a force from the pressure-applying means and transmits a reaction force to the central portion of the bar.

The pressure-applying means may include a single air cylinder.

The laminator may be arranged, such that:
the pressure-applying means further includes a lever member extending in a direction perpendicular to the bar;
the lever member has one end thereof pivotably connected to the frame to define a fulcrum of the lever member and has the other end thereof pivotably connected to one end of the air cylinder to define a point of application of force on the lever member;
the other end of the air cylinder is attached to the frame;
the lever member is engaged at an intermediate portion thereof with the central portion of the bar, the intermediate portion defining a point of action of force on the lever member; and
when the air cylinder is operated, the lever member is pivotally moved about the fulcrum, and presses the bar at the point of action.

### BRIEF DESCRIPTION OF THE DRAWINGS

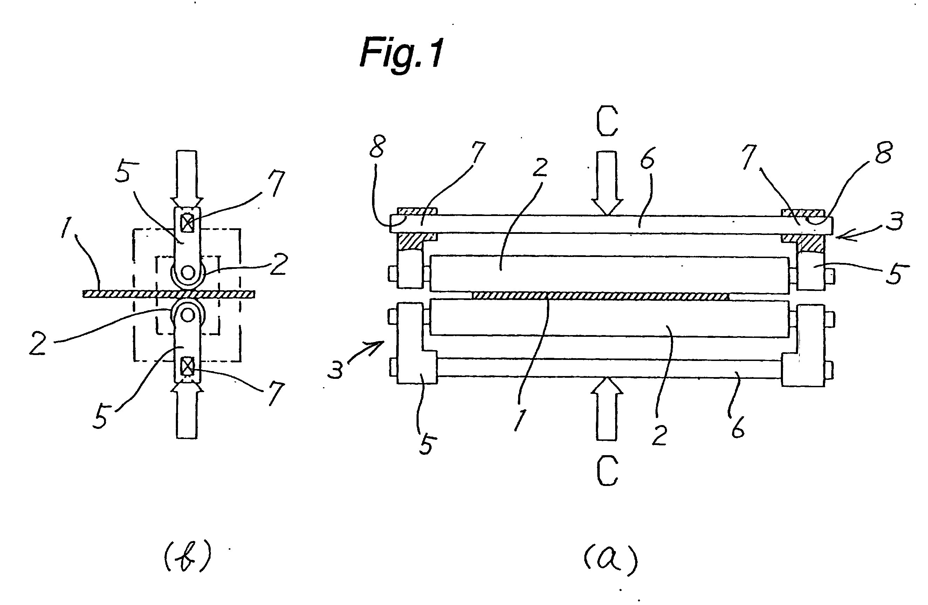

For explaining the principle of the present invention, Fig. 1 schematically shows a characteristic portion of a laminator according to an embodiment of the present invention. Fig. 1(a) is a front view and Fig. 1(b) is a left side view.

Fig. 2 is similar to Fig. 1(b), and a left side view of a laminator according to another embodiment of the present invention.

Fig. 3 is a general view of the laminator having the characteristic portion shown in Fig. 1. Fig. 3(a) is a front view and Fig. 3(b) is a left side view.

Fig. 4 shows a characteristic portion of a laminator according to a further embodiment of the present invention. Fig. 4(a) is a front view and Fig. 4(b) is a left side view.

Fig. 5 shows a characteristic portion of a laminator according to a further embodiment of the present invention. Fig. 5(a) is a front view and Fig. 5(b) is a left side view.

Fig. 6 is a left side view showing a characteristic portion of a laminator according to a further embodiment of the present invention.

Fig. 7 shows a set of diagrams for explaining an effect of bending of pressure rolls when force is applied to bearings on the pressure rolls by means of a pressure-applying apparatus.

### BEST MODE FOR CARRYING OUT THE INVENTION

Fig. 1 shows a characteristic portion of a laminator according to an embodiment of the present invention. This laminator comprises a pair of elongated pressure rolls 2. Opposite end portions of the pressure rolls 2 are rotatably supported by bearings 3. Each bearing 3 comprises a bearing housing 5. A substrate 1 and a film (not shown) are sandwiched between the pressure rolls 2. The film is laminated on the substrate 1 by rotating the pressure rolls 2.

A bar 6 is provided behind each pressure roll 2 so as to extend in parallel to the pressure roll 2. In this embodiment, the bar 6 has a rectangular cross-section. An end portion of the bar 6 is supported by the bearing housings 5 in a manner such that the end portions 7 is inserted into openings 8 each of which is formed in the bearing housing 5 and has a rectangular cross-section.

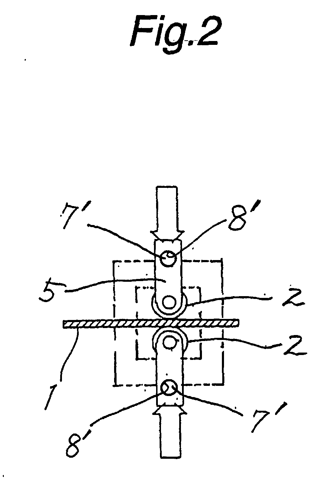

The form of the cross-section of the bar 6 is not limited to a rectangular form. In an embodiment of Fig. 2, the bar 6 has a circular cross-section at at least an end portion 7'. This end portion 7' is inserted into an opening 8' having a circular cross-section formed in the bearing housing 5.

Referring back to Fig. 1, as will be described later, the bars 6 are attached at central portions thereof to frames 10 and 11 of the laminator by bar-supporting means. In a preferred embodiment, one bar-supporting means includes a pressure-applying apparatus such as an air cylinder, and the other bar-supporting means is arranged as a member which receives a force from the pressure-applying apparatus and transmits a reaction force to the central portion of the bar 6. When a force acting toward the substrate 1 is generated by operating the pressure-applying apparatus, forces indicated by reference character C in Fig. 1(a) act on the respective central portions of the bars 6.

These forces C impart a normal force and bending moments to the bearing housings 5. The normal forces act to transmit forces to the pressure rolls 2 which press the substrate 1. Further, the normal forces generate bending moments M1 which tend to cause the pressure rolls 2 to be recessed away from each other as shown in Fig. 7(c).

On the other hand, an angle of deflection is generated at the end portions of the bars 6 due to the effect of forces C and the bearing housings 5 are pivotally moved. The bending moments imparted to the bearing housings 5 act as bending moments M2 on the end portions of the pressure rolls 2. The bending moments M2 tend to cause the pressure rolls 2 to be protruded toward each other as shown in Fig. 7(d).

Thus, the bending moments M1 and M2 which act in opposite directions are applied to each pressure roll 2 at the same time, so that the two bending moments M1 and M2 are substantially canceled. Consequently, the pressure rolls 2 can be held in a substantially straight condition to apply pressure to the substrate 1 and the film.

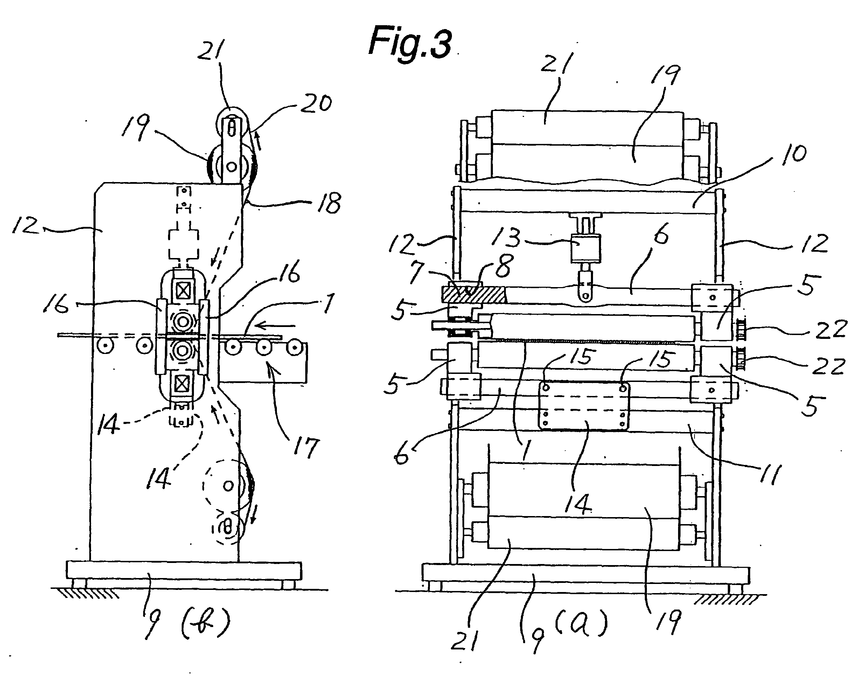

Fig. 3 is a general view of the laminator of the present invention having the characteristic portion shown in Fig. 1. The laminator shown in Fig. 3 is a laminator which is operated manually for adhering a resist film on one or both of opposite surfaces of a substrate for a substrate for a printed circuit board or a glass substrate for a plasma display. The laminator comprises a base frame 9, an upper frame 10, a lower frame 11 and a pair of side frames 12.

The arrangements of pressure rolls 2, bearing housings 5 and bars 6 are as described above in connection with Fig. 1. The pressure roll 2, the bearing housings 5 and the bar 6 on an upper side of the laminator and the pressure roll 2, the bearing housings 5 and the bar 6 on a lower side of the laminator are provided in symmetrical disposition and have substantially the same construction.

With respect to the bar-supporting means for attaching the bars 6 to the frames of the laminator, the upper bar-supporting means and the lower bar-supporting means are different from each other. The upper bar 6 is supported on the upper frame 10 by means of a single air cylinder 13 as a pressure-applying means. When the air cylinder 13 is operated, the upper bar 6 is resiliently deflected and imparts pressure through the bearing housings 5 to the pressure roll 2. A plurality of air cylinders 13 may be used, instead of the single air cylinder 13. Further, a pressure-applying means other than the air cylinder may be utilized.

On the other hand, the lower bar 6 is supported on the lower frame 11 by means of two plate members 14. Each plate member 14 is connected to the lower bar 6 by means of two rotatable pins 15 provided in symmetrical disposition. When the air cylinder 13 is operated, a reaction force is applied to the lower bar 6 through the plate members 14. Due to the use of the rotatable pins 15, the lower bar 6 which has received the reaction force can be deflected in the same form as the upper bar 6 in a symmetrical relationship to the upper bar 6, thus applying pressure to the pressure roll 2 through the bearing housings 5.

By operating the air cylinder 13, the upper and lower pressure rolls 2 are imparted with not only pressure, but also bending moments M1 and M2 acting in opposite directions at the same time, as has been explained referring to Figs. 1 and 7. Therefore, in the pair of pressure rolls 2, the tendencies of bending in opposite directions are substantially canceled, so that the pressure rolls 2 can be held in a substantially straight condition to apply pressure to the substrate 1 and the film.

An appropriate pressure can be obtained by adjusting the pressure of the air cylinder 13. Further, the two bending moments acting in opposite directions can be canceled in a nearly ideal condition by setting the flexural rigidities of the bars 6 and the pressure rolls 2 and the pressure of the air cylinder 13 to appropriate values.

Bearing guides 16 for guiding vertical movement of the bearing housings 5 are attached to the side frames 12.

General description is made with regard to an operation of the laminator of Fig. 3. The substrate 1 transferred by a roller conveyor 17 enters an area between a pair of pressure rolls 2, and a resist film 18 to be laminated on a surface of the substrate 1 is supplied to the area between the pressure rolls 2. When the resist film 18 is unwound from a film roll 19, a cover film 20 is peeled off from a surface of the resist film, and the resist film 18 is supplied to the area between the pressure rolls 2 with a resist side thereof facing the substrate 1. The cover film 20 is rolled up in a roll form 21. The pressure rolls 2 are rotated by a driving apparatus (not shown) connected to driving gears 22. The resist film 18 is laminated on the substrate 1 between the pressure rolls 2 which are rotating.

In the embodiments of Figs. 1 to 3, the bar 6 is supported by the bearing housings 5 in a manner such that the end portions of the bar 6 are inserted into the openings 8 of the bearing housings 5. However, the method for supporting the end portions of the bar 6 by the bearing housings 5 is not particularly limited, as long as the force of the pressure-applying means is surely transmitted through the bar 6 to the bearing housings 5 and generates bending moments M2 in the bearing housings 5, which act on the end portions of the pressure roll 2.

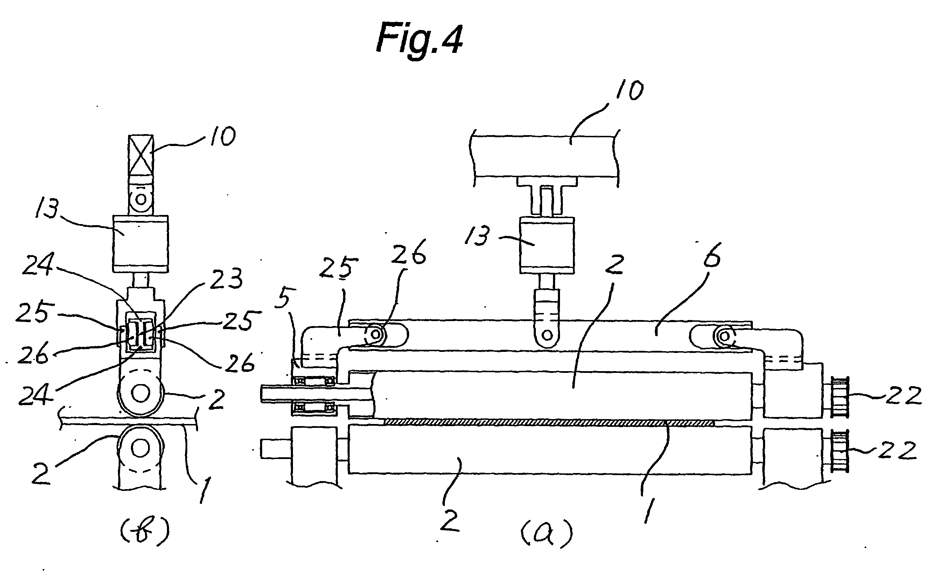

Fig. 4 shows another embodiment in which the method for supporting the end portions of the bar 6 by the bearing housings 5 is modified. Each end portion of the bar 6 has an I-shaped cross-section and the remaining portion of the bar 6 has a rectangular cross-section. The end portion of the bar 6 comprises a web portion 23 and a pair of upper and lower flange portions 24. On the other hand, each bearing housing 5 has two lever portions 25 extending in an axial direction of the pressure roll 2 on opposite sides of the web portion 23 of the bar 6. Each lever portion 25 is provided with a roller 26 at a free end portion thereof. The rollers 26 engage the flange portions 24 on opposite sides of the web portion 23, to thereby support the end portions of the bar 6 by the bearing housings 5. In this embodiment, the bar 6 only serves to transmit normal force from the air cylinder 13 to the rollers 26. The magnitude of the bending moment M2 is determined, depending on the magnitude of normal force acting on the roller 26 and the length of the lever portion 25. The bending moments M2 tend to cause pivotal movement of the bearing housings 5 and cause the pressure rolls 2 to be protruded toward each other.

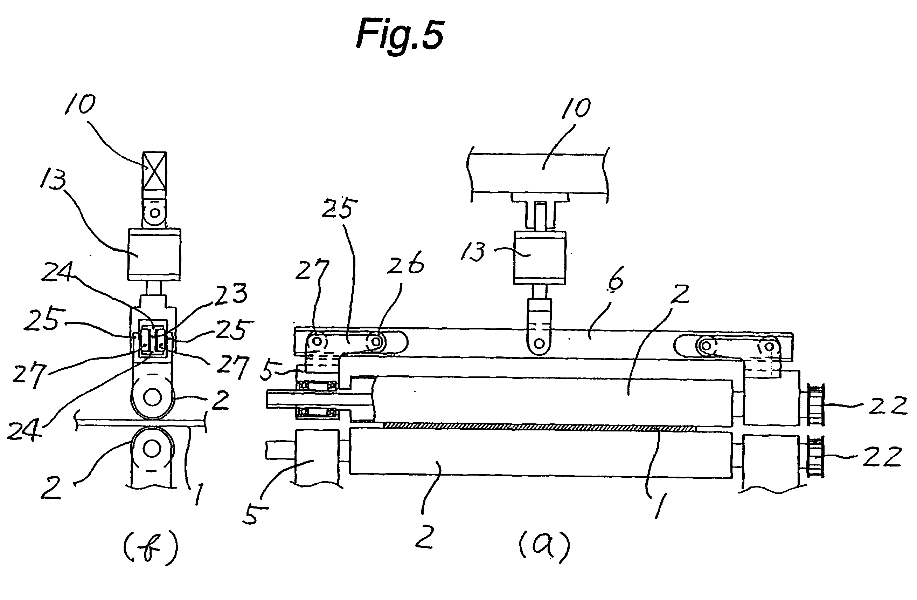

Fig. 5 shows a modified example of the embodiments of Figs. 1 to 3. As compared to the embodiment of Fig. 4, this modified example differs in that a roller 27 having the same diameter as the roller 26 is provided at a proximal end portion of each lever portion 25 and engages the flange portions 24 of the bar 6. Thus, the modified example becomes similar in arrangement and effect to the embodiments of Figs. 1 to 3 in which the end portions of the bar 6 are inserted into the openings of the bearing housings 5.

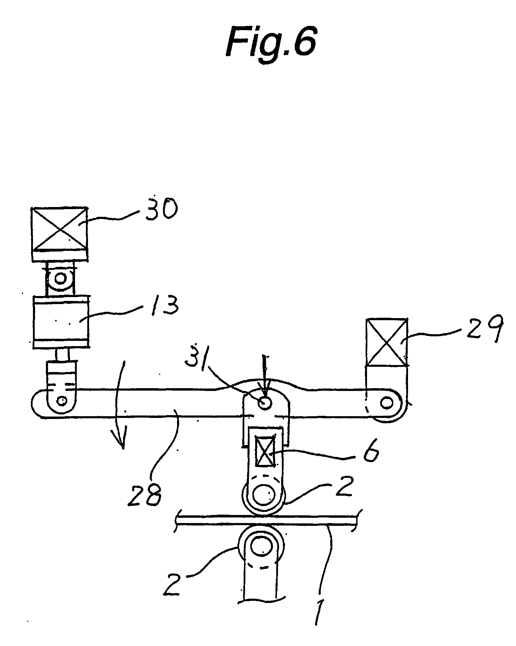

In the embodiments of Figs. 1 to 5, the air cylinder 13 directly applies force to the bar 6. However, in an embodiment of Fig. 6, the pressure-applying means includes a lever member 28, and force is applied to the bar 6 through the lever member 28. One end of the lever member 28 is pivotably connected to a part 29 of the laminator frame to define a fulcrum of the lever member 28. The other end of the lever member 28 is pivotably connected to one end of the air cylinder 13 to define a point of application of force on the lever member 28. The other end of the air cylinder 13 is attached to another part 30 of the frame. Further, the lever member 28 is engaged at an intermediate portion thereof through a pin 31 with the central portion of the bar 6, which intermediate portion becomes a point of action on the lever member 28. When the air cylinder 13 is operated, the lever member 28 pivotally moves about the fulcrum in a direction indicated by an arrow in Fig. 6, and presses the central portion of the bar 6 at the point of action. In this embodiment, the ability required of the air cylinder 13 is varied, depending on the lever ratio. By increasing the lever ratio, the size of the air cylinder can be reduced.

The present invention is also applicable to an auto-cut laminator.

## Claims

1. A laminator for laminating a film on a substrate, comprising:
a frame;
a pair of elongated pressure rolls adapted to have the substrate and the film sandwiched therebetween;
bearings adapted to rotatably support respective end portions of the pressure rolls, each of the bearings comprising a bearing housing;
a pair of bars each provided behind each of the pressure rolls and extending in parallel to the pressure rolls, respective end portions of the bars being supported by the bearing housings; and
bar-supporting means for attaching a central portion of each of the bars to the frame,
wherein:
the bar-supporting means associated with at least one of the bars includes pressure-applying means; and
when the pressure-applying means is operated, pressure is applied through the bars and the bearing housings to the substrate and the film between the pressure rolls, while bending moments which tend to cause the pressure rolls to be projected toward each other are transmitted to the end portions of the pressure rolls.

2. A laminator for laminating a film on a substrate, comprising:
a frame;
a pair of elongated pressure rolls adapted to have the substrate and the film sandwiched therebetween;
bearings adapted to rotatably support respective end portions of the pressure rolls, each of the bearings comprising a bearing housing;
a pair of bars each provided behind each of the pressure rolls and extending in parallel to the pressure rolls, respective end portions of the bars being supported by the bearing housings; and
bar-supporting means for attaching a central portion of each of the bars to the frame,
wherein:
the bar-supporting means associated with at least one of the bars includes pressure-applying means; and
when the pressure-applying means is operated, pressure is applied through the bars and the bearing housings to the substrate and the film between the pressure rolls, while the bearing housings are pivotally moved and bending moments which tend to cause the pressure rolls to be projected toward each other are transmitted to the end portions of the pressure rolls.

3. A laminator for laminating a film on a substrate, comprising:
a frame;
a pair of elongated pressure rolls adapted to have the substrate and the film sandwiched therebetween;
bearings adapted to rotatably support respective end portions of the pressure rolls, each of the bearings comprising a bearing housing;
a pair of bars each provided behind each of the pressure rolls and extending in parallel to the pressure rolls, respective end portions of the bars being supported by the bearing housings; and
bar-supporting means for attaching a central portion of each of the bars to the frame,
wherein:
the bar-supporting means associated with at least one of the bars includes pressure-applying means; and
when the pressure-applying means is operated, pressure is applied through the bars and the bearing housings to the substrate and the film between the pressure rolls, while an angle of deflection is generated at the end portions of the bars and bending moments which tend to cause the pressure rolls to be projected toward each other are transmitted to the end portions of the pressure rolls.

4. The laminator according to any one of claims 1 to 3, wherein the end portions of the bars are supported by the bearing housings in a manner such that they are inserted into openings formed in the bearing housings.

5. The laminator according to claim 4, wherein a cross-section of the opening of the bearing housing and a cross-section of the end portion of the bar inserted into the opening are circular.

6. The laminator according to any one of claims 1 to 3, wherein:
the end portion of the bar has an I-shaped cross-section including a web portion and two flange portions;
the bearing housing includes two lever portions extending inwardly therefrom in an axial direction of the pressure roll on opposite sides of the web portion of the bar; and
the end portions of the bars are supported by the bearing housings in a manner such that each of the lever portions is provided with a roller at a free end portion thereof and the roller is engaged with the flange portion on each of opposite sides of the web portion.

7. The laminator according to any one of claims 1 to 6, wherein:
the pressure roll, the bearing housings and the bar on one side and the pressure roll, the bearing housings and the bar on the other side are provided in symmetrical disposition and have substantially the same construction;
only the bar-supporting means on one side includes the pressure-applying means which is capable of being operated so as to press the central portion of the bar; and
the bar-supporting means on the other side is arranged as a member which receives a force from the pressure-applying means and transmits a reaction force to the central portion of the bar.

8. The laminator according to any one of claims 1 to 7, wherein the pressure-applying means includes a single air cylinder.

9. The laminator according to claim 8, wherein:
the pressure-applying means further includes a lever member extending in a direction perpendicular to the bar;
the lever member has one end thereof pivotably connected to the frame to define a fulcrum of the lever member and has the other end thereof pivotably connected to one end of the air cylinder to define a point of application of force on the lever member;
the other end of the air cylinder is attached to the frame;
the lever member is engaged at an intermediate portion thereof with the central portion of the bar, the intermediate portion defining a point of action of force on the lever member; and
when the air cylinder is operated, the lever member is pivotally moved about the fulcrum and presses the bar at the point of action.
